# EUROPÄISCHE PATENTSCHRIFT

(11) **EP 1 547 907 B1**
(45) Veröffentlichungstag und Bekanntmachung des Hinweises auf die Patenterteilung: **23.08.2006**
(21) Anmeldenummer: 03104872.1
(22) Anmeldetag: 22.12.2003
(51) Int. Cl.: B62D 15/02, B62D 5/04, G01D 5/244, G01D 5/249

(54) **Lenkwinkelsensor und Verfahren zum Überprüfen eines Lenkwinkelsensors auf Vorliegen einer Fehlfunktion**
Steering angle sensor and method for examining a steering angle sensor on the presence of a malfunctioning
Capteur et méthode d'angle de braquage pour examiner un capteur d'angle de braquage sur la présence d'un défaut de fonctionnement

(43) Veröffentlichungstag der Anmeldung: 29.06.2005
(73) Patentinhaber: Ford Global Technologies, LLC, A subsidary of Ford Motor Company, Dearborn, MI 48126 (US)
(72) Erfinder: Jung, Markus, 50859 Köln (DE); Thoene, Alois, 50126 Bergheim (DE)
(74) Vertreter: Drömer, Hans-Carsten

(56) Entgegenhaltungen:
- EP-A- 1 020 344
- EP-A- 1 074 819
- EP-A- 1 182 118
- EP-A- 1 225 427
- DE-A- 19 539 458
- US-A- 5 065 324

## Beschreibung

Die vorliegende Erfindung betrifft einen Lenkwinkelsensor zum Bestimmen des Lenkwinkels einer Lenkanordnung sowie ein Verfahren zum Überprüfen eines Lenkwinkelsensors auf Vorliegen einer Fehlfunktion.

Das Bestimmen des Lenkwinkels hat heutzutage große Bedeutung im Bereich der Fahrdynamikregelung. Aber auch im Bereich des sog. "stear by wire", d. h. des elektronischen Übertragens von Lenksignalen an die gelenkten Räder, kommen Lenkwinkelsensoren zum Einsatz. Die Lenkwinkelsensoren ermitteln in beiden Fällen typischerweise die Winkelstellung des Lenkrades, die in enger Verbindung mit der Stellung der gelenkten Räder und damit der Fahrtrichtung des Fahrzeuges steht. Beispielsweise wird in einem ESP-System neben anderen für die Fahrdynamik des Fahrzeugs wichtigen Parametern der Lenkwinkel ermittelt, um die Fahrtrichtung, in die der Fahrer zu fahren beabsichtigt, zu ermitteln. Der Lenkwinkelsensor übersetzt dabei die Lenkbewegung des Fahrers in elektrische Signale für das ESP-System.

Eine Möglichkeit, einen Lenkwinkelsensor zu realisieren, ist der sog. absolute Lenkwinkelsensor. Ein absoluter Lenkwinkelsensor überträgt die absolute Winkelposition des Lenkrades bzw. des Lenkstocks eines Kraftfahrzeugs an eine Auswerteeinheit, also bspw. die ESP-Einheit. Als kostengünstigere Alternative finden heutzutage aber auch sog. relative Lenkwinkelsensoren Verwendung. Relative Lenkwinkelsensoren übertragen lediglich Impulse, wenn das Lenkrad bzw. der Lenkstock gedreht wird. Aus der Zahl der Impulse und zusätzlichen Informationen, die mittels weiterer Sensoren gewonnen werden, beispielsweise der Drehgeschwindigkeit des Lenkrades, der lateralen Beschleunigung etc., berechnet die Auswerteeinheit die absolute Position des Lenkrades.

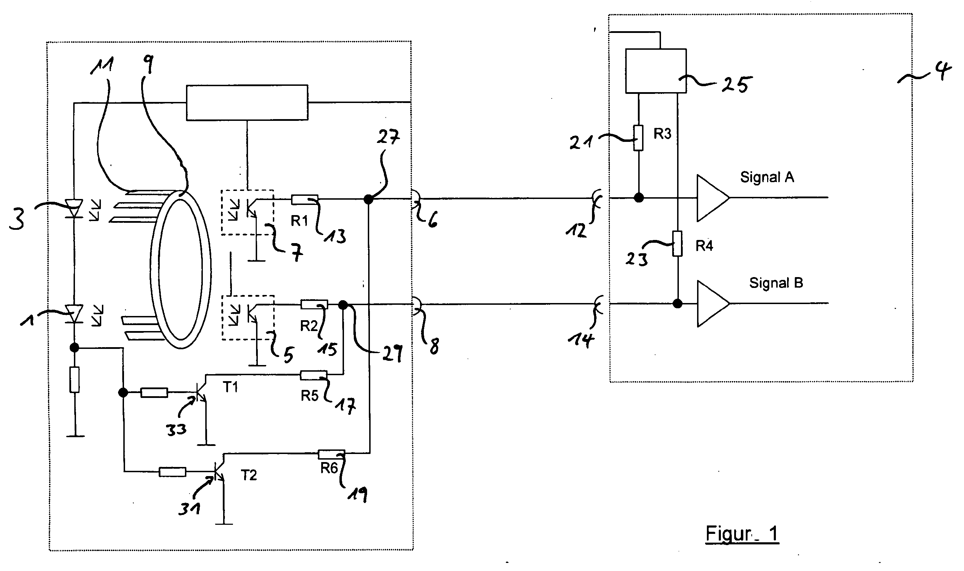

Ein Beispiel für einen relativen Lenkwinkelsensor ist in Figur 1 dargestellt. Er umfaßt zwei Infrarot-LEDs 1, 3 als Signalausgabeelemente einer Signalausgabeeinheit zum Aussenden von Infrarotsignalen, zwei Infrarotempfänger 5, 7 als Aufnahmeeinheiten zum Empfangen der von den LEDs 1, 3 ausgesandten Infrarotsignale und eine Zahnscheibe 9, die eine Anzahl Zähne 11 besitzt und derart zwischen den Infrarot-LEDs 1, 3 und den Infrarotempfängern 5, 7 angeordnet ist, daß die Zähne 11 je nach Winkelstellung des Lenkrades die Strahlengänge von den Infrarot-LEDs 1, 3 zu den Infrarotempfängern 5, 7 unterbrechen oder freigeben. Die Zahnscheibe 9 ist dabei fest mit dem Lenkstock (nicht dargestellt) des Fahrzeuges verbunden, so daß sie sich beim Lenken zusammen mit dem Lenkstock (und damit dem Lenkrad) dreht.

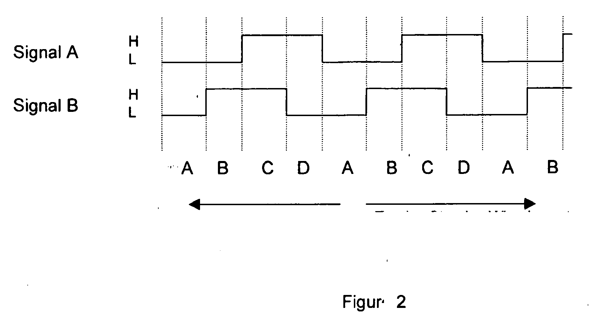

Während einer Drehung des Lenkrades sorgen die Zähne 11 der Zahnscheibe 9 für ein Kodieren, bspw. ein wiederholtes Unterbrechen, der Strahlengänge von den Infrarot-LEDs 1, 3 zu den Infrarotempfängern 5, 7. Dabei sind die Infrarot-LEDs 1, 3 und die Infrarotempfänger 5, 7 so angeordnet, daß das Unterbrechen des Strahlengangs von der LED 1 zum Infrarotempfänger 5 phasenverschoben zum Unterbrechen des Strahlengangs von der LED 3 zum Infrarotempfänger 7 erfolgt. Bspw. ist der Strahlengang von der LED 1 zum zugehörigen Infrarotempfänger 5 ist bereits unterbrochen, während der Strahlengang von der LED 3 zum zugehörigen Infrarotempfänger 7 noch nicht unterbrochen ist. Wird das Lenkrad in dieselbe Richtung weitergedreht, so wird schließlich auch der Strahlengang zwischen der LED 3 und dem Infrarotempfänger 7 unterbrochen, so daß nun beide Strahlengänge unterbrochen sind. Wird das Lenkrad noch weiter in dieselbe Richtung gedreht, so wird die Unterbrechung des Strahlengangs zwischen der LED 1 und dem Infrarotempfänger 5 etwas früher wieder aufgehoben als die Unterbrechung des Strahlengangs zwischen der LED 3 und dem Infrarotempfänger 7 bis schließlich beide Strahlengänge wieder frei sind. Auf diese Weise erhält man den in Figur 2 dargestellten Signalverlauf.

Die Zahnscheibe 9 stellt somit eine Kodiereinrichtung zum Kodieren der Infrarotsignale in Abhängigkeit des Drehwinkels des Lenkstocks dar.

Fig. 2 zeigt die von den Infrarotempfängern ausgegebenen Signalpegel in Abhängigkeit vom Drehwinkel des Lenkstocks bzw. des Lenkrades. Aufgrund der Phasenverschiebung beim Unterbrechen der beiden Strahlengänge kann ermittelt werden, ob das Lenkrad im Uhrzeigersinn oder entgegen dem Uhrzeigersinn gedreht wird. Die Winkelauflösung beim Bestimmen des Lenkwinkels hängt im beschriebenen Sensor von der Breite der Zähne 11 und der Lücken zwischen den Zähnen 11 ab. Ein derartiger Lenkwinkelsensor ist beispielsweise in DE 195 32 903 A1 offenbart.

Mittels einer geeigneten Schaltung kann beim beschriebenen Drehwinkelsensor festgestellt werden, ob dieser fehlerfrei arbeitet. Als wesentliche Elemente umfaßt eine derartige Schaltung vier ohmsche Widerstände 13, 15, 17, 19, die mit Widerständen 21, 23 in einem ESP-Modul zusammenwirken. Die Widerstände 21 und 23 sind zwischen eine Spannungsquelle 25 im ESP-Modul 20 und einen Knoten 27 bzw. 29 geschaltet. Vom Knoten 27 führen zwei Zweige zur Masse, wobei einer der Zweige über den Widerstand 13 und den Infrarotempfänger 7, der im vorliegenden Beispiel als infrarotempfindlicher Transistor ausgebildet ist, zur Masse führt, während der andere Zweig über den Widerstand 19 und einen Transistor 31 zur Masse führt. Entsprechend führen vom Knoten 29 zwei Zweige zur Masse, wobei der eine Zweig über den Widerstand 15 und den Infrarotempfänger 5, der ebenfalls als lichtempfindlicher Transistor ausgestaltet ist, zur Masse führt, während der andere Zweig über den Widerstand 17 und einen weiteren Transistor 33 zur Masse führt. Die Transistoren 31 und 33 dienen dazu, den Stromfluß durch die LEDs zu überwachen und einen Fehler anzuzeigen, wenn der Stromfluß außerhalb des zulässigen Bereiches ist.

Wenn kein Licht den lichtempfindlichen Transistor 7 erreicht, so ist der Pfad vom Knoten 27 über den Transistor 7 zur Masse unterbrochen, und im Ergebnis liegt am Knoten 27 ein hohes Ausgangssignal an. Wenn andererseits Licht den lichtempfindlichen Transistor 7 erreicht, so ist der Transistor 7 leitend, und am Knoten 27 liegt ein niedriges Ausgangssignal an. Entsprechendes gilt für den Pfad vom Knoten 29 über den Widerstand 15 und den infrarotempfindlichen Transistor 5 zur Masse. Der Spannungspegel für ein niedriges Ausgangssignal ist dabei für das Ausgangssignal A durch die Werte der Widerstände 13 und 21 und für das Ausgangssignal B durch die Werte der Widerstände 15 und 23 bestimmt. Mit geeigneten Widerstandswerten dieser Transistoren weist der niedrige Signalpegel einen Spannungspegel im Bereich zwischen 5% und 15% der von der Spannungsquelle 25 zur Verfügung gestellten Spannung VCC auf. Der Spannungspegel des hohen Ausgangssignals wird hingegen durch einen geeigneten Wert des Widerstandes 19 im Falle des Ausgangssignals A und des Widerstandes 17 im Falle des Ausgangssignals B bestimmt, wenn die Transistoren 31 bzw. 33 leitend sind. Der hohe Signalpegel der Ausgangssignale A, B liegt bei geeigneter Wahl der Widerstände 17, 19 im Bereich zwischen 80% und 90% der Versorgungsspannung VCC. Wenn nun ein Ausgangssignal A, B weniger als 5% der Versorgungsspannung VCC, mehr als 95% der Versorgungsspannung VCC beträgt oder im Bereich zwischen 15% und 80% der Versorgungsspannung VCC liegt, so zeigt dies der Auswerteschaltung einen Fehler an, und das System schaltet die Funktion aus. Dies wird dann dem Fahrer beispielsweise mittels einer Warnlampe angezeigt.

Mit der beschriebenen Methode zum Feststellen eines Fehlers im Lenkwinkelsensor ist es jedoch nicht möglich, einen Fehler festzustellen, der zur Folge hat, daß das Signal eines Signalpfades von einer Infrarotleuchtdiode zum ESP Modul konstant bleibt, d. h. das ESP Modul auf einen Signalpfad ein konstantes Ausgangssignal A, B des Lenkwinkelsensors empfängt. Der Grund hierfür liegt darin, daß auch dann eines der beiden Ausgangssignale A, B konstant sein kann, während das andere Ausgangssignal A, B zwischen einem hohen und einem niedrigen Signalpegel hin und her wechselt, wenn der Fahrer des Fahrzeuges keine Lenkbewegung vollzieht. Die Auflösung des Lenkwinkelsensors für die Detektion einer Drehung des Lenkrades liegt nämlich im Bereich von etwa 1,5 Grad. Bei einem Geradeauslauf des Fahrzeuges kann es aufgrund des Spiels des Lenkrades dazu kommen, daß das Lenkrad trotz Geradeauslauf um wenige Grade hin und her bewegt wird. Dieses Hin- und Herbewegen kann dazu führen, daß der Strahlengang zwischen einer Infrarot-LED und einem Infrarotempfänger ständig wiederholt unterbrochen und wieder freigegeben wird, wohingegen der Strahlengang zwischen der anderen Infrarot-LED und dem anderen Infrarotempfänger ständig frei oder unterbrochen bleibt. Dieses Verhalten kann eintreten, wenn die Lenkraddrehungen während der Geradeausfahrt geringer ausfallen als die Auflösung des Lenkwinkelsensors und sich bei einem Signalpfad ein Rand eines Zahnes im Bereich des Signalpfades befindet.

Für eine Auswerteeinheit wie etwa das genannte ESP-System bedeutet dies bspw., daß sie nicht unterscheiden kann, ob einer der Signalpfade aufgrund einer Fehlfunktion ein konstantes Signal liefert, oder ob sich das Fahrzeug in Geradeausfahrt befindet. Dies könnte unter Umständen zu einem Eingreifen des ESP-Systems führen, obwohl sich das Fahrzeug in Geradeausfahrt befindet, oder dazu führen, daß ein Eingreifen des ESP-Systems unterbleibt, obwohl dies aufgrund der Fahrsituation nötig wäre.

Ein Lenkwinkelsensor mit den Merkmalen aus dem Oberbegriff von Anspruch 1 ist aus EP 1 182 118 A2 bekannt. In diesem Lenkwinkelsensor sind drei Sensoren vorhanden, bei denen eine phasenverschobene Signalausgabe erfolgt. Die Kombination der einzelnen Ausgangssignale wird durch Vergleich mit möglichen Signalwerten einer Prüfung auf Plausibilität unterzogen. Es wird von einer Fehlfunktion ausgegangen, wenn die Prüfung auf Plausibilität negativ ausfällt.

Es ist Aufgabe der vorliegenden Erfindung, einen alternativen Lenkwinkelsensor zur Verfügung zu stellen, in dem Ausgangssignale dreier Aufnahmeeinheiten zur einer Konsistenzprüfung herangezogen werden können.

Eine weitere Aufgabe der vorliegenden Erfindung ist es, ein Verfahren zum Überprüfen eines derartigen Lenkwinkelsensors mit mindestens drei Sensorköpfen zum Ausgeben von Ausgabesignalen mit phasenverschobenen Übergängen zwischen verschiedenen Signalpegeln auf Vorliegen einer Fehlfunktion zur Verfügung zu stellen, mit welchen sich auch Fehler feststellen lassen, aufgrund derer das Signal in einem Signalpfad konstant bleibt.

Die erste Aufgabe wird durch einen Lenkwinkelsensor nach Anspruch 1 und die zweite Aufgabe durch ein Verfahren zum Überprüfen eines derartigen Lenkwinkelsensors mit mindestens drei Sensorköpfen zum Ausgeben von Ausgabesignalen mit phasenverschobenen Übergängen zwischen verschiedenen Signalpegeln auf Vorliegen einer Fehlfunktion nach Anspruch 10 gelöst. Die abhängigen Ansprüche enthalten vorteilhafte Weiterbildungen der Erfindung.

Ein erfindungsgemäßer Lenkwinkelsensor zum Bestimmen des Lenkwinkels einer Lenkanordnung umfaßt
- eine Kodiereinrichtung, welche mit der Lenkanordnung derart in Verbindung steht, daß sie Informationen über den aktuellen Lenkwinkel vermittelt,
- eine Signalausgabeeinrichtung zum Ausgeben mindestens eines Signals in Richtung auf die Kodiereinrichtung, welche das von der Signalausgabeeinrichtung stammende Signal entsprechend dem aktuellen Lenkwinkel kodiert,
- zwei Aufnahmeeinheiten, die zum gegeneinander phasenverschobenen Aufnehmen des kodierten Signals und zum Ausgeben je eines Ausgabesignals mit einem Signalpegel, der von der Kodierung des kodierten Signals abhängt, ausgebildet sind, und
- eine mit den Aufnahmeeinheiten zum Empfang der Ausgangssignale in Verbindung stehende Auswerteeinheit zum Ermitteln des Lenkwinkels aus den Ausgabesignalen der Aufnahmeeinheiten.

Der erfindungsgemäße Lenkwinkelsensor umfaßt darüber hinaus mindestens eine dritte Aufnahmeeinheit zum Aufnehmen des kodierten Signals derart, daß es von der dritten Aufnahmeeinheit im Vergleich zu jeder der beiden anderen Aufnahmeeinheiten phasenverschoben aufgenommen wird, und zum Ausgeben eines dritten Ausgabesignals mit einem Signalpegel, der von der Kodierung des kodierten Signals abhängt, und eine mit den mindestens drei Aufnahmeeinheiten zum Empfang des jeweiligen Ausgabesignals in Verbindung stehende Prüfschaltung zum Prüfen der Kombination der Signalpegel der Ausgabesignale auf Konsistenz. Zwei der Aufnahmeeinheiten stehen mit der Auswerteeinheit und der Prüfschaltung in Signalverbindung, wohingegen die dritte Aufnahmeeinheit nur mit der Prüfschaltung in Signalverbindung steht.

Mit der erfindungemäßen Ausgestaltung eines Lenkwinkelsensors kann überflüssiger Schaltungsaufwand vermieden werden. Die Signalausgabeeinrichtung kann zum Ausgeben magnetischer, optischer, elektrischer, etc. Signale ausgebildet sein. Sie kann einen einzigen Sender oder eine Anzahl von Sendern umfassen. Die Aufnahmeeinheiten können entsprechend als magnetische, optische, elektrische, etc. Aufnahmeeinheiten ausgebildet sein. Falls die Signalausgabeeinrichtung lediglich einen einzigen Sender beinhaltet, so wird das Signal derart ausgegeben, daß es von allen drei Aufnahmeeinheiten jeweils als ein kodiertes Signal zu empfangen ist. Wenn die Signalausgabeeinrichtung dagegen mehrere Sender aufweist, so kann jeder Aufnahmeeinheit ein eigener Sender zum Aussenden eines Signals zugeordnet sein.

Die erfindungsgemäße Ausgestaltung des Lenkwinkelsensors ermöglicht es, eine Fehlfunktion, die zu einem konstanten Signal auf einem der Signalpfade führt anhand des Auftretens inkonsistenter Signalpegelkombinationen, also von Signalpegelkombinationen, die bei ordnungsgemäßer Funktion des Sensors nicht auftreten würden, zu erkennen. Beim Drehen des Lenkrades in eine bestimmte Richtung sollten beim fehlerfreien Funktionieren des Lenkwinkelsensors die Ausgabesignale in einer bestimmten Reihenfolge von einem ersten Signalpegel, bspw. einem niedrigen Signalpegel, zu einem zweiten Signalpegel, bspw. einem hohen Signalpegel, wechseln. Die Reihenfolge ist dabei durch die Phasenverschiebung beim Aufnehmen des kodierten Signals durch die Aufnahmeeinheiten festgelegt. Falls nun das Signal eines Signalpfades aufgrund einer Fehlfunktion konstant bleibt, so daß das entsprechende Ausgabesignal einen konstanten Signalpegel aufweist, so bedeutet dies, daß der erwartete Pegelwechsel nicht stattfindet, was zu einer Signalpegelkombination führen kann, die bei ordnungsgemäßer Funktion des Sensors nicht vorkommt. Das Ausbleiben des Übergangs zwischen zwei Signalpegeln führt daher bei bestimmten Winkelstellungen des Lenkrades zu einer Inkonsistenz der festgestellten Signalpegelkombinationen. Eine derartige Inkonsistenz der festgestellten Signalpegelkombinationen tritt hingegen nicht auf, wenn sich das Fahrzeug im Geradeauslauf befindet und das Lenkrad ein wenig hin und her bewegt wird, da das Hin- und Herbewegen die korrekte Phasenbeziehung beim Aufnehmen des kodierten Signals durch die Aufnahmeeinheiten und damit die Reihenfolge der Übergänge von einem Signalpegel zu einem anderen Signalpegel nicht beeinträchtigt.

Insbesondere kann der erfindungsgemäße Lenkwinkelsensor derart ausgestaltet sein, daß jedes Ausgabesignal in Abhängigkeit vom Lenkwinkel einen hohen oder einen niedrigen Signalpegel aufweist, so daß einem Lenkwinkel jeweils eine Signalpegelkombination aus hohen und niedrigen Signalpegeln der Ausgabesignale zugeordnet ist. Die Verteilung der hohen und niedrigen Signalpegel auf die einem Lenkwinkel zugeordneten Ausgabesignale ergibt sich dabei aus den Phasenverschiebungen beim Aufnehmen der kodierten Signale. Da jedes Ausgabesignal in dieser Ausgestaltung des Lenkwinkelsensors nur entweder einen hohen oder einen niedrigen Signalpegel aufweist, kann das Prüfen der Signalpegelkombinationen auf Konsistenz mittels einer geeigneten digitalen Prüfschaltung erfolgen.

Insbesondere ist in dieser Ausgestaltung die Phasenverschiebung beim Aufnehmen der kodierten Signale durch die Aufnahmeeinheiten derart gewählt, daß die beim Lenken vorkommenden Signalpegelkombinationen, also die Verteilungen von hohen und niedrigen Signalpegeln auf die verschiedenen Ausgabesignale, eine echte Teilmenge der Menge aller möglichen Signalpegelkombinationen darstellt. Unter einer echten Teilmenge soll hierbei zu verstehen sein, daß die Menge aller möglichen Signalpegelkombinationen mindestens eine Signalpegelkombination enthält, welche nicht in der Teilmenge enthalten ist. Mit dieser Ausgestaltung ist das Erkennen einer Fehlfunktion des Lenkwinkelsensors anhand einer Signalpegelkombination, die nicht der Teilmenge angehört, möglich. Entsprechend ist in einer Weiterbildung der Erfindung die Prüfschaltung zum Auffinden von Signalpegelkombinationen aus hohen und niedrigen Signalpegeln, die nicht zur die Lenkwinkel repräsentierenden Teilmenge gehören, ausgestaltet.

Im erfindungsgemäßen Lenkwinkelsensor kann die Signalausgabeeinrichtung mindestens einen Leuchtkörper als Signalausgabeeinheit und die Kodiereinrichtung für die vom mindestens einen Leuchtkörper in Richtung auf die Aufnahmeeinheiten ausgehende Strahlung durchlässige und undurchlässige Abschnitte umfassen. Die Aufnahmeeinheiten sind in diesem Fall als lichtempfindliche Sensoren ausgebildet. Insbesondere kann die Signalausgabeeinrichtung drei infrarote Strahlung aussendende Leuchtdioden als Leuchtkörper, drei infrarotempfindliche Transistoren als Aufnahmeeinheiten und ein Zahnrad, eine Zahnscheibe, eine Lochscheibe oder ähnliches als Kodiereinrichtung umfassen. Zudem kann als Prüfschaltung eine digitale Schaltung vorhanden sein, wobei alle drei infrarotempfindliche Transistoren mit der Prüfschaltung verbunden sind, wohingegen nur zwei der infrarotempfindlichen Transistoren sowohl mit der digitalen Prüfschaltung als auch mit der Auswerteschaltung in Signalverbindung stehen.

Ein erfindungsgemäßes Verfahren zum Überprüfen eines erfindungsgemäßen Lenkwinkelsensors mit mindestens drei Sensorköpfen zum Ausgeben von Ausgabesignalen mit phasenverschobenen Übergängen zwischen verschiedenen Signalpegeln auf Vorliegen einer Fehlfunktion umfaßt die Schritte:
- Definieren von Standardphasenverschiebungen zwischen den einzelnen Ausgabesignalen für die Übergänge zwischen verschiedenen Signalpegeln,
- Vergleichen der Kombination der Signalpegel der Ausgabesignale mit den sich aus den Standardphasenverschiebungen ergebenden Signalpegelkombinationen und
- Ausgeben eines Fehlersignals, wenn mindestens eine der Signalpegelkombinationen keiner der sich aus den Standardphasenverschiebungen ergebenden Signalpegelkombinationen entspricht.

Wie bereits zuvor erwähnt, zeigt eine Inkonsistenz der Signalpegelverteilungen eine Fehlfunktion des Lenkwinkelsensors an. Das erfindungsgemäße Verfahren ermöglicht es, durch den Vergleich der tatsächlichen Signalpegelverteilungen mit den durch die Standardphasenverschiebungen festgelegten Signalpegelverteilungen eine derartige Inkonsistenz festzustellen.

Das Definieren der Standardphasenverschiebungen zwischen den einzelnen Ausgabesignalen kann dabei bspw. dadurch erfolgen, daß auf die Signalpfade zwischen den Sendern und Empfängern der Sensorköpfe eine Kodiereinrichtung wirkt, die derart ausgestaltet und zwischen den Sendern und Empfängern angeordnet ist, daß sie die Signale der Signalpfade in Abhängigkeit vom Drehwinkel des Lenkrades kodiert und daß ein durch die Kodierung hervorgerufener Übergang von einem Signalpegel zu einem anderen nicht bei allen Ausgabesignalen gleichzeitig erfolgt, sondern daß die Ausgabesignale den Übergang in einer bestimmten Reihenfolge vollziehen. Die Phasenverschiebung beim Aufnehmen der Ausgabesignale läßt sich beispielsweise konkret dadurch einführen, daß drei Infrarot-LEDs und drei entsprechende infrarotempfindliche Transistoren derart um den Lenkstock angeordnet sind, daß ihr Winkelabstand einem ganzzahligen Vielfachen der Winkelauflösung einer Kodierscheibe plus einem bestimmten Bruchteil der Winkelauflösung entspricht. So könnte der Winkelabstand zwischen den Leuchtdioden-Transistor-Paaren beispielsweise dem 5 1/3-fachen der Winkelauflösung der Kodierscheibe entsprechen.

Wenn jedes Ausgabesignal in Abhängigkeit vom aktuellen Lenkwinkel entweder einen hohen Signalpegel oder einen niedrigen Signalpegel aufweist und die sich aus den Standardphasenverschiebungen ergebenden Signalpegelkombinationen der Ausgabesignale durch eine echte Teilmenge der Menge aller möglichen Signalpegelkombinationen definiert sind, ist das Vergleichen der Signalpegelkombinationen mit den sich aus den Standardphasenverschiebungen ergebenden Signalpegelkombinationen mittels einer digitalen Schaltung möglich. In diesem Fall kann das Vergleichen der Kombination der Signalpegel der Ausgabesignale mit den sich aus den Standardphasenverschiebungen ergebenden Signalpegelkombinationen durch Prüfen der jeweils aktuellen Signalpegelkombination dahingehend, ob sie der echten Teilmenge angehört, erfolgen. Das Ausgeben des Fehlersignals erfolgt, wenn die Prüfung ergibt, daß die aktuelle Signalpegelkombination der Teilmenge nicht angehört.

Weitere Merkmale, Eigenschaften und Vorteile der vorliegenden Erfindung ergeben sich aus der nachfolgenden Beschreibung eines Ausführungsbeispiels unter Bezugnahme auf die beiliegenden Figuren.
- Fig. 1: zeigt das Schaltbild eines konventionellen Lenkwinkelsensors.
- Fig. 2: zeigt die Signalverläufe des Lenkwinkelsensors aus Figur 1.
- Fig. 3: ist ein Schaltbild eines Ausführungsbeispiels für einen erfindungsgemäßen Lenkwinkelsensor.
- Fig. 4: zeigt die Signalverläufe des in Figur 3 gezeigten Ausführungsbeispiels.
- Fig. 5: zeigt eine Ausführung der Prüfschaltung als Blockschaltbild.

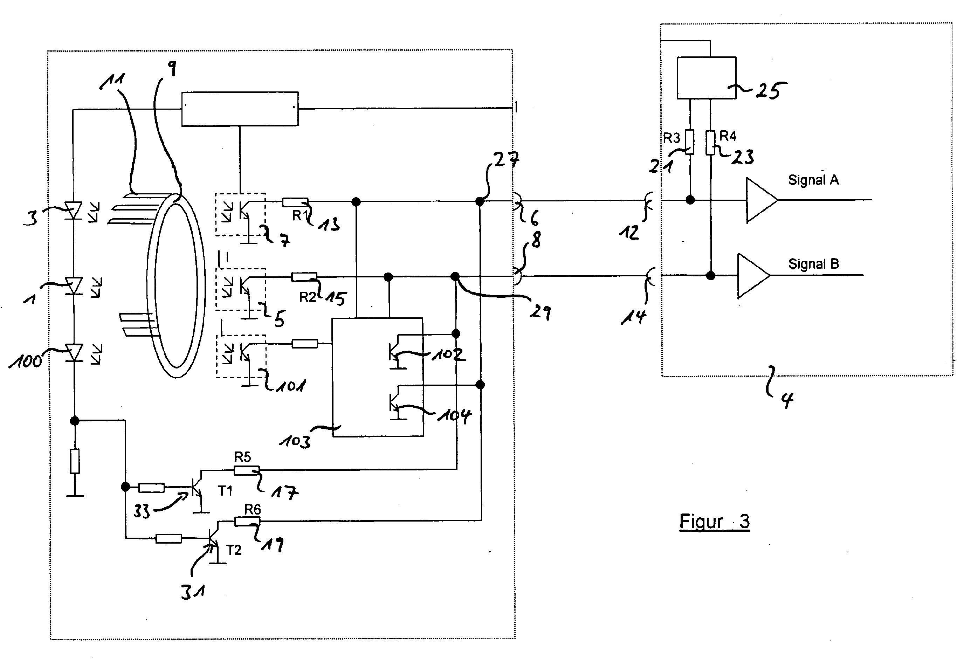

Ein Ausführungsbeispiel für den erfindungsgemäßen Lenkwinkelsensor ist in Figur 3 dargestellt. Figur 3 stellt den Lenkwinkelsensor in Verbindung mit einem ESP-Modul dar, welches als Auswerteeinheit zum Auswerten der vom Lenkwinkelsensor ausgegebenen Signale A, B dient. Selbstverständlich kann jedoch auch eine andere Auswerteeinheit als ein ESP-Modul Verwendung finden. Beispielhaft sei hier genannt, daß derselbe Sensor auch in einem System zum elektronischen Übertragen der Lenksignale an die Fahrzeugräder (stear by wire) Verwendung finden kann. Außerdem kann die Auswerteeinheit auch direkt in den Lenkwinkelsensor integriert sein.

Der erfindungsgemäße Lenkwinkelsensor unterscheidet sich vom eingangs beschriebenen Lenkwinkelsensor im Wesentlichen dadurch, daß eine dritte Infrarot-LED 100, ein dritter Infrarotempfänger 101 sowie eine Prüfschaltung 103 vorhanden sind. Mit der Prüfschaltung 103 sind die Infrarotempfänger 5, 7 und 101 verbunden. Die Prüfschaltung 103 empfängt somit die Ausgangssignale A, B, C aller drei Infrarotempfänger 5, 7, 101. Die Infrarotempfänger 5 und 7 sind darüber hinaus zur Ausgabe ihrer Ausgabesignale A, B mit Ausgangsanschlüssen 6 und 8 verbunden, welche wiederum mit Eingangsanschlüssen 12, 14 des ESP-Moduls 4 in Verbindung stehen. Das Ausgangssignal C des dritten Infrarotempfängers 101 wird dagegen lediglich der Prüfschaltung 103 zugeführt. Die Prüfschaltung 103 weist außerdem zwei Ausgangstransistoren 102, 104 auf, welche mit den Ausgangsanschlüssen 6, 8 des Lenkwinkelsensors in Verbindung stehen, um die an den Ausgangsanschlüssen 6, 8 anliegenden Ausgangssignale A, B auf Null zu setzen, falls ein Fehler im Lenkwinkelsensor festgestellt wird.

Die dritte Infrarot-LED 100 und der dritte Infrarotempfänger 101 sind derart relativ zur Zahnscheibe 9 und zu den beiden anderen Infrarot-LEDs 1, 3 bzw. den beiden anderen Infrarotempfängern 5, 7 angeordnet, daß das Ausgabesignal C des dritten Infrarotempfängers 101 eine Phasenverschiebung sowohl gegenüber dem Ausgabesignal A des Infrarotempfängers 7 als auch gegenüber dem Ausgabesignal B des Infrarotempfängers 5 aufweist.

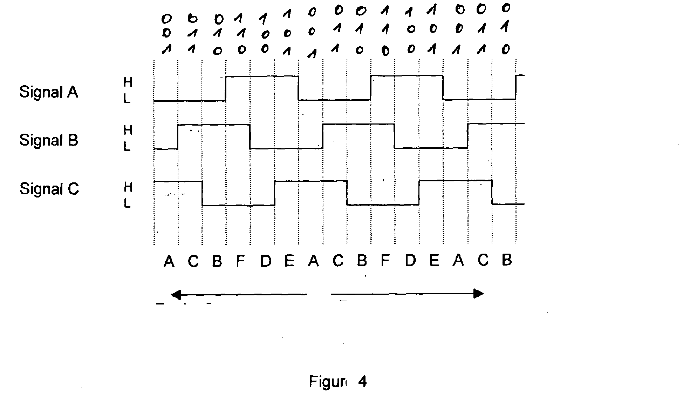

Die Phasenverschiebung der Signale A, B, C ist in Figur 4 dargestellt, in welcher der Signalpegel für das jeweilige Signal in Abhängigkeit vom Lenkwinkel dargestellt ist. Die drei Signale A, B, C weisen in Abhängigkeit vom Lenkwinkel eine periodische Struktur auf, in der sich hohe Signalpegel H und niedrige Signalpegel L abwechseln. Im vorliegenden Ausführungsbeispiel ist eine Signalperiode (die einen hohen und einen niedrigen Pegel umfaßt) in sechs gleiche Teile unterteilt, d. h. jeder dieser Teile, im folgenden Periodenteile genannt, entspricht einem Sechstel der Gesamtperiode. Das Signal B ist gegenüber dem Signal A in Figur 4 um zwei Periodenteile, d.h. um ein Drittel der Periode nach links verschoben, und das Ausgabesignal C ist gegenüber dem Ausgabesignal B wiederum um zwei Periodenteile, d.h. um ein Drittel der Periode nach links versetzt. Somit ist das Signal C gegenüber dem Signal A um insgesamt vier Periodenteile oder zwei Drittel der Periode nach links versetzt.

Wenn man jedem Periodenteil einen binäres Zahlentripel, in welchem jede Stelle eines der Ausgabesignale repräsentiert und eine 1 einen hohen Signalpegel und eine 0 einen niedrigen Signalpegel darstellt, als eine Dateneinheit mit drei Bit zuordnet, so lassen sich die Periodenteile durch diese Dateneinheit vollständig bezeichnen. Die Dateneinheiten, die den in Fig. 4 dargestellten Periodenteilen zugeordnet sind, sind über dem jeweiligen Periodenteil angegeben. Eine derartige Dateneinheit kann grundsätzlich acht verschiedene Zustände annehmen, von denen aufgrund der in Figur 4 dargestellten Phasenverschiebungen der Ausgabesignale A, B, C lediglich sechs Zustände realisiert sind. Aufgrund der gewählten Phasenverschiebung sind die Dateneinheiten (0, 0, 0) und (1, 1, 1) bei einwandfrei funktionierenden Sensoren nicht vorhanden. Tritt jedoch ein Fehler auf, der beispielsweise dazu führt, daß das Signal C konstant niedrig ist, so würde die Dateneinheit für den in Figur 4 ganz links dargestellten Periodenteil statt (0, 0, 1) den Wert (0, 0, 0) enthalten, der bei der gewählten Phasenverschiebung der drei Signale nicht vorkommen dürfte.

Die Prüfschaltung 103, die mit allen drei Infrarotempfängern 5, 7, 101 zum Empfang der Ausgabesignale A, B, C verbunden ist, hat die Aufgabe, festzustellen, ob mindestens eine Dateneinheit, d.h. eine Verteilung von hohen und niedrigen Pegeln H, L auf die drei Ausgabesignale A, B, C, vorhanden ist, die bei der vorgegebenen Phasenverschiebung nicht vorkommen dürfte. Wenn eine Drehung des Lenkrades stattfindet und dabei eine Dateneinheit erreicht wird, die nicht vorkommen dürfte, so sorgt die Prüfschaltung 103 dafür, daß die Ausgabesignale A und B auf Null gesetzt werden, was dem ESP-Modul 4 anzeigt, daß der Lenkwinkelsensor fehlerhaft arbeitet und seine Ausgabesignale ungültig sind.

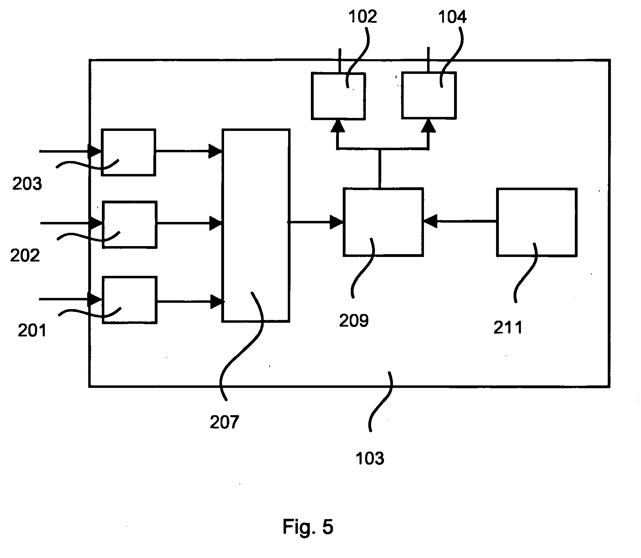

Zum Durchführen dieser Prüfung umfaßt die Prüfschaltung 103, wie in Fig. 5 dargestellt, bspw. drei Signaleingänge 201, 202, 203, einen Kombinierer 207 und einen Komparator 209. Die Signaleingänge 201, 202, 203 dienen zum Empfang der Ausgabesignale A, B, C und sind mit dem Kombinierer 207, der die Signalpegel der Ausgabesignale A, B, C zu einer Dateneinheit mit 3 Bit kombiniert und diese Dateneinheit an den Komparator 209 weitergibt, verbunden. Der Komparator 209 steht außer mit dem Kombinierer 207 mit einem Speicher 211 in Verbindung, der die zulässigen Signalpegelkombinationen in Form zulässiger Dateneinheiten enthält. Als Speicher 211 kann dabei entweder ein interner Speicher der Prüfschaltung 103 oder ein externer, mit der Prüfschaltung 103 über eine Datenleitung verbundener Speicher Verwendung finden. Der Komparator 209 vergleicht die vom Kombinierer 207 erhaltene Dateneinheit mit den im Speicher 211 enthaltenen Dateneinheiten und gibt ein Fehlersignal aus, wenn die vom Kombinierer 207 erhaltene Dateneinheit mit keiner der im Speicher 211 gespeicherten Dateneinheit übereinstimmt. Als Reaktion auf die Ausgabe des Fehlersignals setzt die Prüfschaltung 103 die an den Ausgangsanschlüssen 6, 8 (Fig. 3) anliegenden Signalpegel auf Null.

Da der erfindungsgemäße Lenkwinkelsensor keine Änderungen bezüglich der Schnittstelle zwischen dem Lenkwinkelsensor und dem ESP-Modul voraussetzt, brauchen keine Änderungen am ESP-Modul selbst vorgenommen zu werden. Das Vorsehen eines dritten Signalpfades und einer Prüfschaltung ist daher eine kosteneffektive Lösung, um eine zusätzliche Redundanz zum Lenkwinkelsensor hinzuzufügen.

Auf die beschriebene Weise kann auch ein Fehler, der zu einem konstanten niedrigen Signalpegel oder einem konstanten hohen Signalpegel des Ausgabesignals A oder des Ausgabesignals B führt, detektiert werden.

Die Prüfschaltung 103 kann in Form von Hardware oder in Form von Software, die auf einem Mikroprozessor läuft, realisiert werden. Wenn sie in Form von Hardware realisiert ist, so kann die für das Prüfen verwendete Logikschaltung etwa aus Flip-Flops oder Zustandsmaschinen ausgebaut sein. Wichtig ist alleine, daß die Prüfschaltung in der Lage ist, zwischen verschiedenen Zuständen zu unterscheiden und eine Prüfung dahingehend vorzunehmen, ob ein erkannter Zustand zulässig ist.

## Patentansprüche

1. Lenkwinkelsensor zum Bestimmen des Lenkwinkels einer Lenkanordnung mit
- einer Kodiereinrichtung (9), welche mit der Lenkanordnung derart in Verbindung steht, daß sie Information über den aktuellen Lenkwinkel vermittelt,
- einer Signalausgabeeinrichtung (1, 3) zum Ausgeben mindestens eines Signals in Richtung auf die Kodiereinrichtung (9), welche das von der Signalausgabeeinrichtung (1, 3) stammende Signal entsprechend dem aktuellen Lenkwinkel kodiert,
- zwei Aufnahmeeinheiten (5, 7), die zum gegeneinander phasenverschobenen Aufnehmen des kodierten Signals und zum Ausgeben je eines Ausgabesignals (A, B) mit einem Signalpegel, der von der Kodierung des kodierten Signals abhängt, ausgebildet sind,
- einer mit den Aufnahmeeinheiten (5, 7) zum Empfang der Ausgabesignale (A, B) in Verbindung stehende Auswerteeinheit (4) zum Ermitteln des Lenkwinkels aus den Ausgabesignalen (A, B) der Aufnahmeeinheiten (5, 7),
- mindestens einer dritten Aufnahmeeinheit (101) zum Aufnehmen des kodierten Signals derart, daß es im Vergleich zu jeder der beiden anderen Aufnahmeeinheiten (5, 7) phasenverschoben aufgenommen wird, und zum Ausgeben eines dritten Ausgabesignals (C) mit einem Signalpegel, der von der Kodierung des kodierten Signals abhängt, und
- einer mit den mindestens drei Aufnahmeeinheiten (5, 7, 101) zum Empfang des jeweiligen Ausgabesignals (A, B, C) in Verbindung stehende Prüfschaltung (103) zum Prüfen der Kombination der Signalpegel der Ausgabesignale (A, B, C) auf Konsistenz,
**dadurch gekennzeichnet, dass**
zwei der Aufnahmeeinheiten (5, 7) mit der Auswerteeinheit und der Prüfschaltung (103) in Signalverbindung stehen, wohingegen die dritte Aufnahmeeinheit (101) nur mit der Prüfschaltung (103) in Signalverbindung steht.

2. Lenkwinkelsensor nach Anspruch 1,
**dadurch gekennzeichnet, daß**
die Ausgabesignale (A, B, C) je nach in Abhängigkeit vom Lenkwinkel hohe (H) und niedrige (L) Signalpegel aufweisen, so daß einem Lenkwinkel jeweils eine Signalpegelkombination hoher und niedriger Signalpegel zugeordnet ist.

3. Lenkwinkelsensor nach Anspruch 2,
**dadurch gekennzeichnet, daß**
die Phasenverschiebung beim Aufnehmen des kodierten Signals derart gewählt ist, daß die möglichen Signalpegelkombinationen von einer echten Teilmenge der Menge aller möglichen Signalpegelkombinationen repräsentiert werden.

4. Lenkwinkelsensor nach Anspruch 3,
**dadurch gekennzeichnet, daß**
die Prüfschaltung (103) zum Auffinden von Signalpegelkombinationen aus hohen (H) und niedrigen (L) Signalpegeln, die nicht zur die Lenkwinkel repräsentierenden Teilmenge gehören, ausgebildet ist.

5. Lenkwinkelsensor nach einem der vorangehenden Ansprüche,
**dadurch gekennzeichnet, daß**
die Signalausgabeeinrichtung mehrere Signalausgabeeinheiten (1, 3, 100) umfaßt, von denen jede einer der Aufnahmeeinheiten (5, 7,101) zugeordnet ist.

6. Lenkwinkelsensor nach einem der vorangehenden Ansprüche,
**dadurch gekennzeichnet, daß**
- die Signalausgabeeinrichtung mindestens einen Leuchtkörper (5, 7, 101) als Signalausgabeeinheit umfaßt,
- die Kodiereinrichtung (9) für die vom mindestens einen Leuchtkörper (1, 3, 100) ausgehende Strahlung in Richtung auf die Aufnahmeeinheiten (5, 7, 101) durchlässige und undurchlässige Abschnitte umfasst und
- die Aufnahmeeinheiten als lichtempfindliche Sensoren (5, 7, 101) ausgebildet sind.

7. Lenkwinkelsensor nach Anspruch 2 und Anspruch 6,
**dadurch gekennzeichnet, daß**
ein Ausgabesignal (A, B, C) einen hohen Signalpegel (H) aufweist, wenn die entsprechende Aufnahmeeinheit (5, 7, 101) keine Strahlung empfängt und einen niedrigen Signalpegel (L) aufweist, wenn die entsprechende Aufnahmeeinheit (5, 7, 101) Strahlung empfängt oder umgekehrt.

8. Lenkwinkelsensor nach Anspruch 6 oder 7,
**dadurch gekennzeichnet, daß**
- die Signalausgabeeinrichtung drei infrarote Strahlung aussendende Leuchtdioden (1, 3, 100) als Leuchtkörper umfaßt,
- drei Aufnahmeeinheiten vorhanden sind, die als infrarotempfindliche Sensoren (5, 7, 101) ausgebildet sind, und
- als Kodiereinrichtung ein Zahnrad (9), eine Zahnscheibe, eine Lochscheibe oder ähnliches vorhanden ist.

9. Lenkwinkelsensor nach Anspruch 8,
**dadurch gekennzeichnet, daß**
als Prüfschaltung (103) eine digitale Schaltung vorhanden ist.

10. Verfahren zum Überprüfen eines Lenkwinkelsensors nach einem der Ansprüche 1 bis 9 mit mindestens drei Sensorköpfen zum Ausgeben von Ausgabesignalen (A, B, C) mit phasenverschobenen Übergängen zwischen verschiedenen Signalpegeln auf Vorliegen einer Fehlfunktion mit den Schritten:
- Definieren von Standardphasenverschiebungen zwischen den einzelnen Ausgabesignalen (A, B, C) für die Übergängen zwischen verschiedenen Signalpegeln,
- Vergleichen der Kombination der Signalpegel der Ausgabesignale (A, B, C) mit den sich aus den Standardphasenverschiebungen ergebenden Signalpegelkombinationen und
- Ausgeben eines Fehlersignals, wenn mindestens eine der Signalpegelkombinationen keiner der sich aus den Standardphasenverschiebungen ergebenden Signalpegelkombinationen entspricht.

11. Verfahren nach Anspruch 10,
**dadurch gekennzeichnet, daß**
jedes Ausgabesignal (A, B, C) in Abhängigkeit vom aktuellen Lenkwinkel entweder einen hohen Signalpegel (H) oder einen niedrigen Signalpegel (L) aufweist und die Standardphasenverschiebung zwischen den Ausgabesignalen (A, B, C) durch eine echte Teilmenge der Menge aller möglichen Signalpegelkombinationen der Ausgabesignale (A, B, C) definiert ist.

12. Verfahren nach Anspruch 11,
**dadurch gekennzeichnet, daß**
ein Prüfen der jeweils aktuellen Signalpegelkombination dahingehend erfolgt, ob sie der Teilmenge angehört und das Ausgeben eines Fehlersignals erfolgt, wenn die Prüfung ergibt, daß die aktuelle Signalpegelkombination nicht der Teilmenge angehört.

## Claims

1. Steering angle sensor for determining the steering angle of a steering arrangement, having
- an encoding device (9) that is connected to the steering arrangement in such a way that it provides information on the current steering angle,
- a signal emission device (1, 3) for emitting at least one signal towards the encoding device (9) that encodes the signal coming from the signal emission device (1, 3) according to the current steering angle,
- two detection units (5, 7), which are designed for mutually phase-shifted detection of the encoded signal and each to output an output signal (A, B) having a signal level that depends on the encoding of the encoded signal,
- an evaluation unit (4) connected to the detection units (5, 7) to receive the output signals (A, B) for determining the steering angle from the output signals (A, B) of the detection units (5, 7),
- at least a third detection unit (101) for detecting the encoded signal in such a way that it is detected phase-shifted with respect to each of the two other detection units (5, 7), and for the output of a third output signal (C) having a signal level that depends on the encoding of the encoded signal, and
- a check circuit (103) connected to the at least three detection units (5, 7, 101) for receiving the respective output signal (A, B, C) to check the combination of the signal levels of the output signals (A, B, C) for consistency,
**characterized in that**
two of the detection units (5, 7) are in signal communication with the evaluation unit and the check circuit (103), whereas the third detection unit (101) is only in signal communication with the check circuit (103).

2. Steering angle sensor according to Claim 1,
**characterized in that**
the output signals (A, B, C) each have high (H) and low (L) signal levels depending on the steering angle, so that each steering angle is assigned a signal-level combination of high and low signal levels.

3. Steering angle sensor according to Claim 2,
**characterized in that**
the phase shift for detection of the encoded signal is selected such that the possible signal-level combinations are represented by a proper subset of the set of all possible signal-level combinations.

4. Steering angle sensor according to Claim 3,
**characterized in that**
the check circuit (103) is designed to find signal-level combinations of high (H) and low (L) signal levels that do not belong to the subset representing the steering angle.

5. Steering angle sensor according to one of the preceding claims,
**characterized in that**
the signal emission device comprises a plurality of signal emission elements (1, 3, 100), each of which is assigned to one of the detection units (5, 7, 101).

6. Steering angle sensor according to one of the
preceding claims,
**characterized in that**
- the signal emission device comprises at least one light source (5, 7, 101) as signal emission element,
- the encoding device (9) comprises sections that transmit and sections that do not transmit the radiation being emitted from the at least one light source (1, 3, 100) towards the detection units (5, 7, 101), and
- the detection units are designed as light-sensitive sensors (5, 7, 101).

7. Steering angle sensor according to Claim 2 and Claim 6,
**characterized in that**
an output signal (A, B, C) has a high signal level (H) when the corresponding detection unit (5, 7, 101) is not receiving any radiation, and has a low signal level (L) when the corresponding detection unit (5, 7, 101) is receiving radiation, or vice versa.

8. Steering angle sensor according to Claim 6 or 7,
**characterized in that**
- the signal emission device comprises as light sources three light emitting diodes (1, 3, 100) emitting infrared radiation,
- three detection units designed as infrared-sensitive sensors (5, 7, 101) are provided, and
- a toothed wheel (9), a toothed disc, a perforated disc or the like is provided as encoding device.

9. Steering angle sensor according to Claim 8,
**characterized in that**
a digital circuit is provided as check circuit (103).

10. Method for checking for a malfunction in a steering angle sensor according to one of Claims 1 to 9 comprising at least three sensor heads for the output of output signals (A, B, C) having phase-shifted transitions between different signal levels, comprising the steps:
- defining standard phase shifts between the individual output signals (A, B, C) for the transitions between different signal levels,
- comparing the combination of the signal levels of the output signals (A, B, C) with the signal-level combinations resulting from the standard phase shifts, and
- output of a fault signal if at least one of the signal-level combinations does not match any of the signal-level combinations resulting from the standard phase shifts.

11. Method according to Claim 10,
**characterized in that**
each output signal (A, B, C) has either a high signal level (H) or a low signal level (L) depending on the current steering angle, and the standard phase shift between the output signals (A, B, C) is defined by a proper subset of the set of all possible signal-level combinations of the output signals (A, B, C).

12. Method according to Claim 11,
**characterized in that**
the current signal-level combination at any one time is checked to see whether it belongs to the subset, and a fault signal is output if the check finds that the current signal-level combination does not belong to the subset.

## Revendications

1. Capteur d'angle de direction destiné à déterminer l'angle de direction d'un arrangement de direction, comprenant
- un dispositif de codage (9) qui est en liaison avec l'arrangement de direction de telle sorte qu'il transmet l'information sur l'angle de direction actuel,
- un dispositif d'émission de signal (1, 3) pour émettre au moins un signal en direction du dispositif de codage (9), lequel code le signal provenant du dispositif d'émission de signal (1, 3) en fonction de l'angle de direction actuel,
- deux unités d'enregistrement (5, 7) qui sont configurées pour l'enregistrement en déphasage mutuel du signal codé afin de délivrer chacune un signal de sortie (A, B) ayant un niveau de signal qui dépend du codage du signal codé,
- une unité d'interprétation (4) en liaison avec les unités d'enregistrement (5, 7) pour recevoir les signaux de sortie (A, B) afin de déterminer l'angle de direction à partir des signaux de sortie (A, B) des unités d'enregistrement (5, 7),
- au moins une troisième unité d'enregistrement (101) pour enregistrer le signal codé de telle sorte qu'il soit enregistré déphasé par rapport à chacune des deux autres unités d'enregistrement (5, 7) afin de délivrer un troisième signal de sortie (C) ayant un niveau de signal qui dépend du codage du signal codé, et
- un circuit de contrôle (103) en liaison avec les au moins trois unités d'enregistrement (5, 7, 101) pour recevoir le signal de sortie (A, B, C) correspondant afin de contrôler la cohérence de la combinaison des niveaux de signal des signaux de sortie (A, B, C),
**caractérisé en ce que**
deux des unités d'enregistrement (5, 7) sont en liaison de signalisation avec l'unité d'interprétation et le circuit de contrôle (103), alors que la troisième unité d'enregistrement (101) est seulement en liaison de signalisation avec le circuit de contrôle (103).

2. Capteur d'angle de direction selon la revendication 1, **caractérisé en ce que** les signaux de sortie (A, B, C) présentent des niveaux de signal hauts (H) et bas (L), suivant l'angle de direction, de sorte qu'une combinaison de niveaux de signal hauts et bas est à chaque fois associée à un angle de direction.

3. Capteur d'angle de direction selon la revendication 2, **caractérisé en ce que** le déphasage lors de l'enregistrement du signal codé est choisi de telle sorte que la combinaison possible de niveaux de signal est représentée par une quantité partielle réelle des quantités de toutes les combinaisons possibles de niveaux de signal.

4. Capteur d'angle de direction selon la revendication 3, **caractérisé en ce que** le circuit de contrôle (103) est configuré pour trouver les combinaisons de niveaux de signal hauts (H) et bas (L) qui ne font pas partie de la quantité partielle représentant l'angle de direction.

5. Capteur d'angle de direction selon l'une des revendications précédentes, **caractérisé en ce que** le dispositif d'émission de signal comprend plusieurs unités d'émission de signal (1, 3, 100) dont chacune est associée à l'une des unités d'enregistrement (5, 7, 101).

6. Capteur d'angle de direction selon l'une des revendications précédentes, **caractérisé en ce que**
- le dispositif d'émission de signal comprend au moins une lampe (5, 7, 101) comme unité d'émission de signal,
- le dispositif de codage (9) comprend des sections transparentes et non transparentes en direction des unités d'enregistrement (5, 7, 101) pour le rayonnement sortant de l'au moins une lampe (1, 3, 100) et
- les unités d'enregistrement sont réalisées sous la forme de capteurs photosensibles (5, 7, 101).

7. Capteur d'angle de direction selon la revendication 2 et la revendication 6, **caractérisé en ce qu'**un signal de sortie (A, B, C) présente un niveau de signal haut (H) lorsque l'unité d'enregistrement (5, 7, 101) correspondante ne reçoit pas de rayonnement et présente un niveau de signal bas (L) lorsque l'unité d'enregistrement (5, 7, 101) correspondante reçoit un rayonnement ou inversement.

8. Capteur d'angle de direction selon la revendication 6 ou 7, **caractérisé en ce que**
- le dispositif d'émission de signal comprend comme lampes trois diodes électroluminescentes (1, 3, 100) émettant un rayonnement infrarouge,
- il existe trois unités d'enregistrement qui sont réalisées sous la forme de capteurs sensibles aux infrarouges (5, 7, 101) et
- une roue dentée (9), un disque denté, un disque perforé ou similaire est présent comme dispositif de codage.

9. Capteur d'angle de direction selon la revendication 8, **caractérisé en ce que** le circuit de contrôle (103) présent est un circuit numérique.

10. Procédé pour contrôler un capteur d'angle de direction selon l'une des revendications 1 à 9, comprenant au moins trois têtes de détection pour délivrer des signaux de sortie (A, B, C) avec des transitions déphasées entre les différents niveaux de signal en présence d'un défaut de fonctionnement comprenant les étapes suivantes :
- définition des déphasages standard entre les signaux de sortie (A, B, C) individuels pour les transitions entre les différents niveaux de signal,
- comparaison de la combinaison des niveaux de signal des signaux de sortie (A, B, C) avec les combinaisons de niveaux de signal résultant des déphasages standard et
- émission d'un signal de défaut si au moins l'une des combinaisons de niveaux de signal ne correspond à aucune des combinaisons de niveaux de signal résultant des déphasages standard.

11. Procédé selon la revendication 10, **caractérisé en ce que** chaque signal de sortie (A, B, C) présente, suivant l'angle de direction actuel, soit un niveau de signal haut (H), soit un niveau de signal bas (L) et le déphasage standard entre les signaux de sortie (A, B, C) est défini par une quantité partielle réelle des quantités de toutes les combinaisons possibles de niveaux de signal des signaux de sortie (A, B, C).

12. Procédé selon la revendication 11, **caractérisé en ce qu'**un contrôle de la combinaison actuelle des niveaux de signal est effectué pour vérifier si elle fait partie de la quantité partielle actuelle et il y a émission d'un signal de défaut si le contrôle amène à constater que la combinaison actuelle des niveaux de signal ne fait pas partie de la quantité partielle.
